# EUROPEAN PATENT APPLICATION

(11) **EP 3 435 522 A1**
(43) Date of publication of application: **30.01.2019**
(21) Application number: 17769729.9
(22) Date of filing: 16.02.2017
(51) Int. Cl.: H02K 1/27, H02K 15/02, H02K 21/12

(54) **ROTOR AND PRODUCTION METHOD THEREFOR**

(30) Priority: 25.03.2016 JP 2016062565
(71) Applicant: Daikin Industries, Ltd., Osaka-shi, Osaka 530-8323 (JP)
(72) Inventor: SATOU, Junichi, Osaka-shi Osaka 530-8323 (JP); OHTSUJI, Motofumi, Osaka-shi Osaka 530-8323 (JP); FUJITA, Hiroki, Osaka-shi Osaka 530-8323 (JP)
(74) Representative: Hoffmann Eitle
(86) International application number: PCT/JP2017/005695
(87) International publication number: WO 2017/163682

(57) **Abstract**

A rotor includes a shaft (1), a hub (2) that is fixed to one axial end part of the shaft (1), is configured to cover one axial end face of the shaft (1), and is made of a resin, a plurality of connection parts (3) that radially outward extend from the hub (2) of the rotor and are made of the resin, and an outer peripheral part (4) that is disposed radially outside the hub (2) and is connected to the hub (2) via the connection parts (3). A resin injection gate mark (5) is provided on one axial end face of the hub (2).

## Description

### TECHNICAL FIELD

The present invention relates to a rotor for use in a motor of, for example, a compressor or a blower, and a production method for the rotor.

### BACKGROUND ART

A conventional rotor includes a connection component, ribs, and an outer peripheral part (refer to, for example, JP 2001-320844 A (Patent Literature 1)). The connection component is formed in a tubular shape. The ribs radially outward extend from the connection component of the rotor. The outer peripheral part is connected to a radially outer end of the ribs and surrounds the connection component.

The connection component has an inner peripheral face that is fixed to an outer peripheral face of a shaft. The connection component also has a central axis that coincides with a central axis of the shaft. The connection component is integrally formed with the ribs and the outer peripheral part, by integral molding using a thermoplastic resin.

The outer peripheral part has an outer peripheral face to which a magnetic pole part is fixed. The magnetic pole part is formed in an annular shape and is made of a plastic magnet. The magnetic pole part is made of a resin that is harder than the thermoplastic resin and contains, for example, a magnetic material (hereinafter, such a resin will be referred to as a "plastic magnet material resin").

### CITATION LIST

### PATENT LITERATURE

Patent Literature 1: JP 2001-320844 A

### SUMMARY OF INVENTION

### TECHNICAL PROBLEM

In order to form the magnetic pole part, typically, the plastic magnet material resin is injected into an annular space for forming the magnetic pole part in a die, from a plurality of resin injection gates provided in a circumferential direction of the annular space at predetermined intervals in the die. The following problem may arise when the production process for the rotor is simplified by also forming the connection component, the ribs, and the outer peripheral part, using the plastic magnet material resin.

In the case of forming all of the connection component, the ribs, the outer peripheral part, and the magnetic pole part, using the plastic magnet material resin, a space inside a die is filled with the plastic magnet material resin, with the shaft partially disposed in the space inside the die. At this time, the plastic magnet material resin flows from an annular space for forming the magnetic pole part, into a tubular space for forming the connection component, via radial spaces for forming the ribs.

This may cause a problem of a reduction in fixation strength between the connection component and the shaft, because of an increase in weld lines on the connection component, the weld lines being formed when the plastic magnet material resin flows from the radial space into the tubular spaces.

It is hence an object of the present invention to provide a rotor allowing a hub made of a resin to be fixed to a shaft with improved fixation strength between the hub and the shaft, and a production method for the rotor.

### SOLUTIONS TO PROBLEM

In order to solve the problem, a rotor of the present invention comprises:
a shaft;
a hub that is fixed to one axial end part of the shaft, is configured to cover one axial end face of the shaft, and is made of a resin;
a plurality of connection parts that radially outward extend from the hub of the rotor and are made of the resin; and
an outer peripheral part that is disposed radially outside the hub and is connected to the hub via the connection parts, wherein
a resin injection gate mark is provided on one axial end face of the hub.

With this configuration, since the resin injection gate mark is on the one axial end face of the hub, a die used for producing the rotor has a resin injection gate disposed opposite the one axial end face of the shaft. When a molten resin is injected into the die through the resin injection gate, the hub is formed in a space into which the molten resin is directly injected from the resin injection gate. This configuration enables a reduction in number of weld lines on the hub and therefore enhances fixation strength between the hub and the shaft.

In a rotor of one embodiment, the connection parts are each inclined to form an acute angle with respect to an axial direction of the rotor.

According to this embodiment, the connection parts are each inclined to form an acute angle with respect to the axial direction. In forming the connection parts, therefore, the molten resin is allowed to smoothly flow into a space for forming the connection parts.

In a rotor of one embodiment, the hub, the connection parts, and the outer peripheral part are each made of a plastic magnet.

According to this embodiment, since the hub, the connection parts, and the outer peripheral part are each made of the plastic magnet, the hub, the connection parts, and the outer peripheral part are integrally formed with the shaft by integral molding with ease. In addition, the outer peripheral part is magnetized with ease.

A production method for a rotor,
the rotor includes:
a shaft;
a hub that is fixed to one axial end part of the shaft, is configured to cover one axial end face of the shaft, and is made of a resin;
a plurality of connection parts that radially outward extend from the hub of the rotor and are made of the resin; and
an outer peripheral part that is disposed radially outside the hub and is connected to the hub via the connection parts,
the production method comprises:
defining a hub formation space for forming the hub, connection part formation spaces for forming the connection parts, and an outer peripheral part formation space for forming the outer peripheral part, using a plurality of dies with the hub formation space, the connection part formation spaces, and the outer peripheral part formation space communicating with each other, and disposing the one axial end face of the shaft in the hub formation space; and
injecting a molten resin from a resin injection gate of one of the dies, the resin injection gate being disposed opposite the one axial end face of the shaft, into the hub formation space, supplying the molten resin from the hub formation space to the outer peripheral part formation space via the connection part formation spaces, and curing the molten resin in each of the hub formation space, the connection part formation spaces, and the outer peripheral part formation space, to form the hub, the connection parts, and the outer peripheral part.

With this configuration, the molten resin injected into the hub formation space through the resin injection gate flows into the outer peripheral part formation space via the connection part formation spaces. This configuration enables a reduction in number of weld lines on the hub and therefore enhances fixation strength between the hub and the shaft.

### ADVANTAGEOUS EFFECTS OF INVENTION

In the rotor according to the present invention, the resin injection gate mark is on the one axial end face of the hub. This configuration enables a reduction in number of weld lines on the hub and therefore enhances fixation strength between the hub and the shaft.

In the production method for the rotor according to the present invention, the molten resin is injected into the hub formation space through the resin injection gate disposed opposite the one axial end face of the shaft in the die. The molten resin is then allowed to flow from the hub formation space into the outer peripheral part formation space via the connection part formation spaces. This configuration therefore enables a reduction in number of weld lines on the hub. This configuration accordingly enhances fixation strength between the hub and the shaft.

### BRIEF DESCRIPTION OF DRAWINGS

FIG. 1 is a schematic top perspective view of a rotor according to a first embodiment of the present invention.
FIG. 2 is a schematic top view of the rotor.
FIG. 3 is a schematic side view of the rotor.
FIG. 4 is a schematic bottom perspective view of the rotor.
FIG. 5 is a schematic sectional view taken along line V-V in FIG. 2.
FIG. 6 is a schematic sectional view showing a step of a production method for the rotor.
FIG. 7 is a schematic sectional view showing a step subsequent to the step illustrated in FIG. 2.
FIG. 8 is a schematic sectional view showing a step of a production method according to a comparative example.
FIG. 9 is a schematic sectional view of a rotor according to a second embodiment of the present invention.

### DESCRIPTION OF EMBODIMENTS

A specific description will be given of a rotor according to an illustrative embodiment of the present invention. In the drawings, identical reference signs represent identical components. Also in the drawings, dimensions including a length, a width, a thickness, and a depth have appropriately been changed from an actual scale for the sake of clarification and simplification of the drawings, and therefore do not correspond to actual relative dimensions.

### [First embodiment]

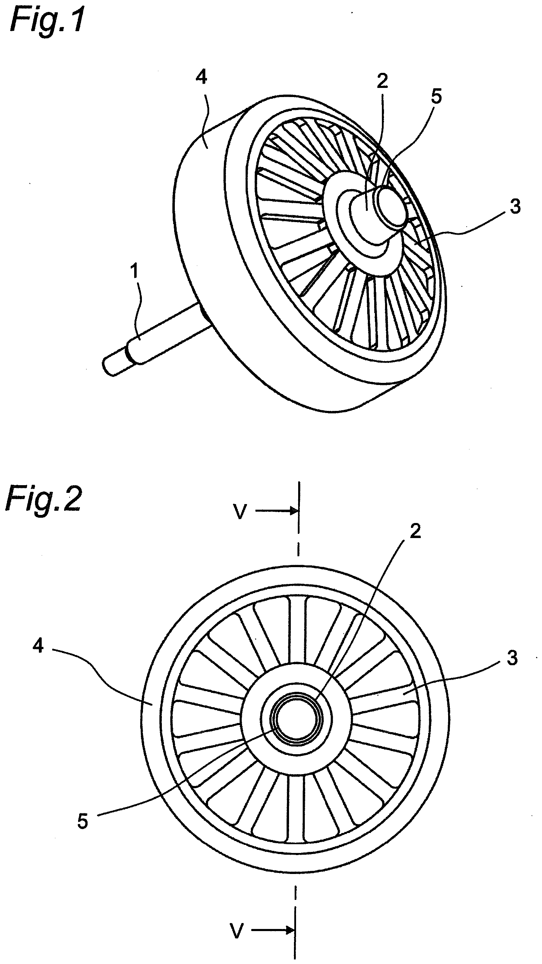

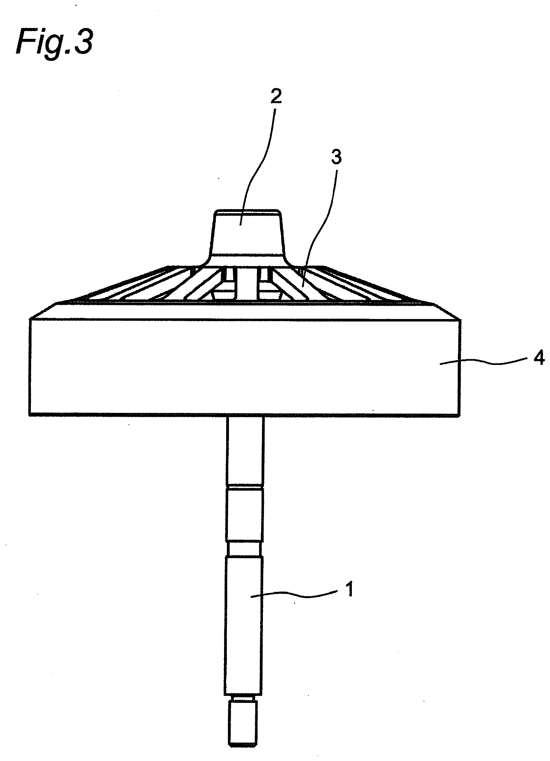

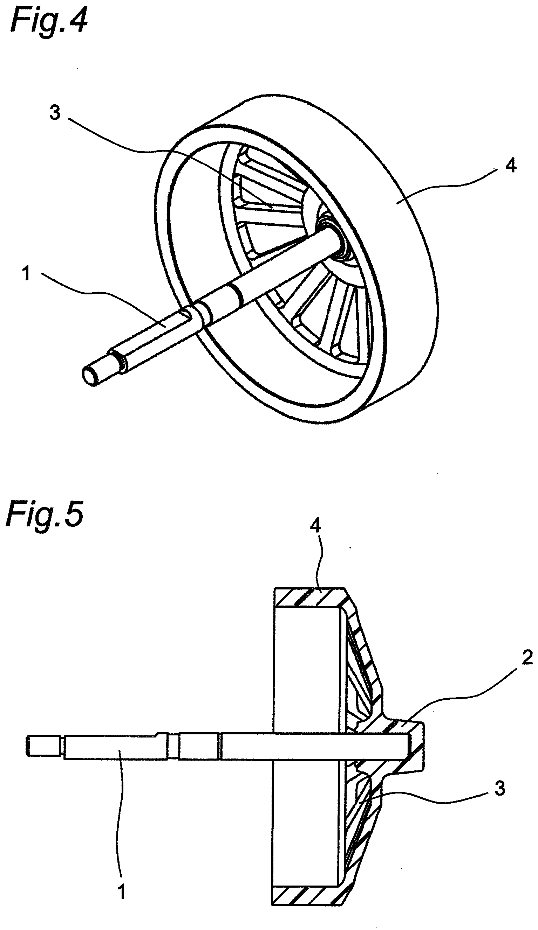

FIG. 1 is a schematic top perspective view of a rotor according to a first embodiment of the present invention as seen from obliquely above. FIG. 2 is a schematic top view of the rotor as seen from above. FIG. 3 is a schematic side view of the rotor as seen laterally. FIG. 4 is a schematic bottom perspective view of the rotor as seen from below. FIG. 5 is a schematic sectional view taken along line V-V in FIG. 2.

As illustrated in FIGs. 1 to 5, the rotor includes a shaft 1, a hub 2 that is fixed to one axial end part of the shaft 1, a plurality of connection parts 3 that radially outward extend from the hub 2 of the rotor, and an outer peripheral part 4 that is connected to the hub 2 via the connection parts 3.

The shaft is made of, for example, a metal and is integrated with the hub 2, the connection parts 3, and the outer peripheral part 4. Therefore, when the outer peripheral part 4 rotates about the shaft 1, the shaft 1 also rotates together with the outer peripheral part 4.

The hub 2 is made of a plastic magnet as an example of a resin, and is formed to cover one axial end face of the shaft 1. A resin injection gate mark 5 formed in a circular shape is provided on one axial end face of the hub 2. The one axial end face of the hub 2 has molecular orientation due to a resin flow from its radially inner side to its radially outer side.

The connection parts 3 are provided in a circumferential direction of the rotor at substantially equal intervals and are each made of the plastic magnet. Each of the connection parts 3 is inclined to form an acute angle with respect to an axial direction of the rotor. In other words, a radially outer end part of each connection part 3 is located closer to the other axial end part (i.e., an end part not covered with the hub 2) of the shaft 1 than a radially inner end part of each connection part 3 is. In addition, a through space in the axial direction is defined between adjoining two of the connection parts 3.

As in the hub 2 and the connection parts 3, the outer peripheral part 4 is also made of the plastic magnet. The outer peripheral part 4 is formed in a tubular shape and is disposed around the hub 2. The outer peripheral part 4 is subjected to magnetization processing such that north poles and south poles are alternately arranged in the circumferential direction.

Since the rotor having the configuration described above has the resin injection gate mark 5 on the one axial end face of the hub 2, a die used for producing the rotor has a resin injection gate disposed opposite the one axial end face of the shaft 1. When a molten resin containing, for example, a magnetic material powder (hereinafter, such a resin will be referred to as a "molten magnetic resin") is injected into the die through the resin injection gate, the hub 2 is obtained in a space into which the molten magnetic resin is directly injected. This configuration enables a reduction in number of weld lines on the hub 2 and therefore enhances fixation strength between the shaft 1 and the hub 2.

The molten magnetic resin is injected at a certain temperature into each section of the space for forming the hub 2. Therefore, since the molten magnetic resin shrinks substantially uniformly in the space, the hub 2 is obtained with reduced variation in strength.

Since the connection parts 3 are each inclined to form an acute angle with respect to the axial direction, the molten magnetic resin smoothly flows into spaces for forming the connection parts 3, in forming the connection parts 3.

Since the hub 2, the connection parts 3, and the outer peripheral part 4 are made of the plastic magnet, the hub 2, the connection parts 3, and the outer peripheral part 4 are obtained by integral molding with ease. In addition, the outer peripheral part 4 is magnetized with ease.

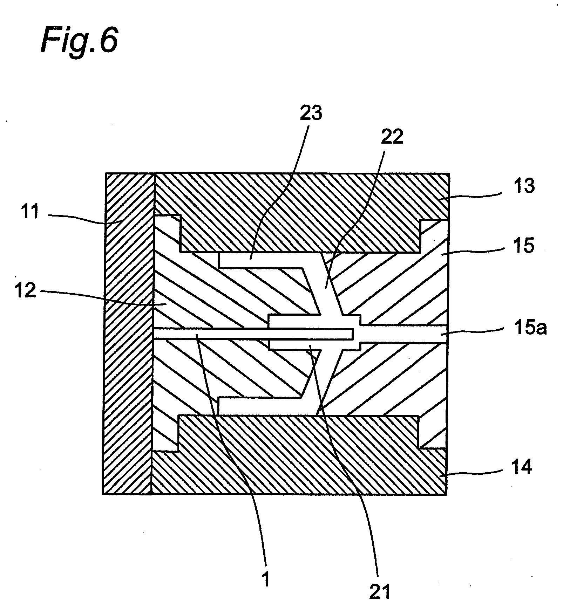

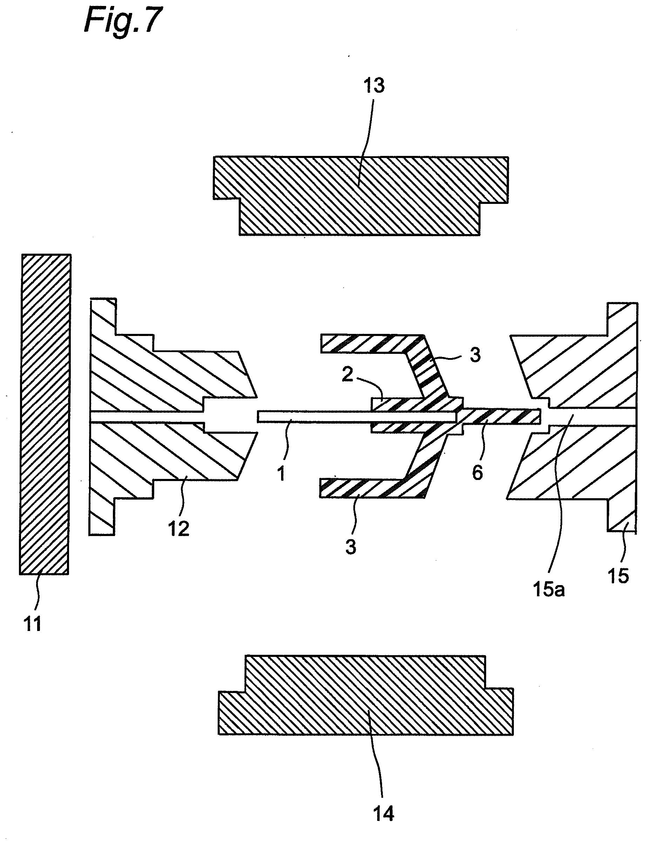

With reference to FIGs. 6 and 7, next, a description will be given of a production method for the rotor.

As illustrated in FIG. 6, first, a plurality of dies 11 to 15 are engaged with each other. These dies 11 to 15 thus define a hub formation space 21 for forming the hub 2, connection part formation spaces 22 for forming the connection parts 3, and an outer peripheral part formation space 23 for forming the outer peripheral part 4, with the hub formation space 21, the connection part formation spaces 22, and the outer peripheral part formation space 23 communicating with each other. In addition, the one axial end face of the shaft 1 is disposed in the hub formation space 21.

Next, a molten magnetic resin is injected into the hub formation space 21 through the resin injection gate 15a disposed opposite the one axial end face of the hub 2 in the die 15. The molten magnetic resin is then allowed to flow from the hub formation space into the outer peripheral part formation space 23 via the connection part formation spaces 22.

Finally, the molten magnetic resin in each of the hub formation space 21, the connection part formation spaces 22, and the outer peripheral part formation space 23 is cured. The dies 11 to 15 are then disengaged from each other as illustrated in FIG. 7. The hub 2, the connection parts 3, and the outer peripheral part 4 each integrated with the shaft 1 are thus obtained. The resin injection gate mark 5 (illustrated in FIG. 1) is formed when a runner 6 illustrated in FIG. 7 is removed.

As described above, the molten magnetic resin injected into the hub formation space 21 through the resin injection gate 15a flows into the outer peripheral part formation space 23 via the connection part formation spaces 22. This configuration enables a reduction in number of weld lines on the hub 2 and therefore enhances the fixation strength between the shaft 1 and the hub 2.

In addition, the connection part formation spaces 22 are inclined to form an acute angle with respect to the axial direction. The molten magnetic resin is therefore allowed to smoothly flow through the connection part formation spaces 22 from the hub formation space 21 toward the outer peripheral part formation space 23.

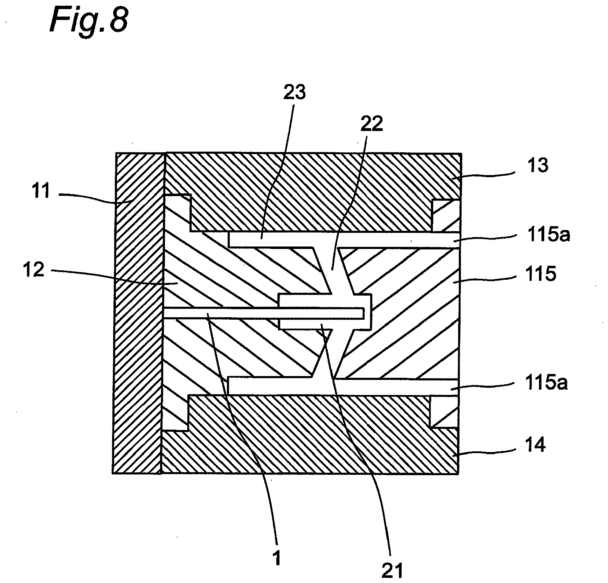

It is assumed herein that a die 115 illustrated in FIG. 8 is used instead of the die 15. In this case, a molten magnetic resin is injected into an outer peripheral part formation space 23 through a plurality of resin injection gates 115a provided in a circumferential direction of the die 115 at predetermined intervals in the die 115. As a result, the molten magnetic resin flows from the outer peripheral part formation space 23 into a hub formation space 21 via connection part formation spaces 22, which may cause an increase in number of weld lines on the hub 2.

In the first embodiment, the connection parts 3 are each inclined to form an acute angle with respect to the axial direction. Alternatively, the connection parts 3 may be formed to be orthogonal to the axial direction.

In the first embodiment, the intervals between adjoining two of the connection parts 3 in the circumferential direction are substantially the same, but may be different.

### [Second embodiment]

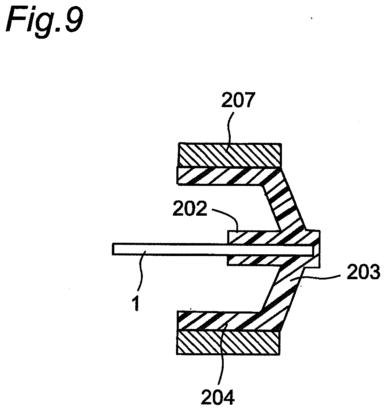

FIG. 9 is a schematic sectional view of a rotor according to a second embodiment of the present invention, as seen from a plane parallel to an axial direction.

The rotor includes a hub 202, connection parts 203, and an outer peripheral part 204 that differ only in material from the hub 2, the connection parts 3, and the outer peripheral part 4 described in the first embodiment. More specifically, the hub 202, the connection parts 203, and the outer peripheral part 204 are integrally formed with one another by integral molding, using a thermoplastic resin such as polyethylene or polypropylene.

An annular magnet 207 is fixed by press fitting to an outer peripheral face of the outer peripheral part 204. The annular magnet 207 is a sintered magnet that is obtained through a sintering step, a heat treatment step, a magnetization processing step, and the like. Also in the annular magnet 207, north poles and south poles are alternately arranged in a circumferential direction of the rotor, as in the outer peripheral part 4 described in the first embodiment.

Although not illustrated in the drawings, the hub 202, the connection parts 203, and the outer peripheral part 204 are also formed by a similar production method to that for the hub 2, the connection parts 3, and the outer peripheral part 4 described in the first embodiment. A circular resin injection gate mark is therefore left on one axial end face of the hub 202. A metal ring formed of, for example, an iron plate or a steel plate is interposed between the outer peripheral face of the outer peripheral part 204 and the annular magnet 207.

The rotor having the configuration described above produces functional effects similar to those described in the first embodiment, and the annular magnet 207 is retrofittable. The rotor having the configuration described above therefore has high versatility.

In the second embodiment, the annular magnet 207 is fixed by press fitting to the outer peripheral face of the outer peripheral part 204. Alternatively, a plastic magnet may be fixed by double molding to the outer peripheral face of the outer peripheral part 204.

In the second embodiment, an iron plate or a steel plate is interposed between the outer peripheral face of the outer peripheral part 204 and the annular magnet 207. However, such an iron plate or steel plate is not necessarily interposed between the outer peripheral face of the outer peripheral part 204 and the annular magnet 207.

Although the specific embodiments of the present invention have been described, the present invention is not limited to the first and second embodiments described above, and various modifications may be made within the scope of the present invention. For example, an embodiment of the present invention may be made by appropriately combining the first embodiment with the second embodiment.

The present invention is applicable to rotors of various motors such as a brushless motor and a stepping motor, and production methods for such rotors.

### REFERENCE SIGNS LIST

- 1: shaft
- 2, 202: hub
- 3, 203: connection part
- 4, 204: outer peripheral part
- 5: resin injection gate mark
- 11 to 15: die
- 15a: resin injection gate
- 21: hub formation space
- 22: connection part formation spaces
- 23: outer peripheral part formation space

## Claims

1. A rotor comprising:
a shaft (1);
a hub (2, 202) that is fixed to one axial end part of the shaft (1), is configured to cover one axial end face of the shaft (1), and is made of a resin;
a plurality of connection parts (3, 203) that radially outward extend from the hub (2, 202) of the rotor and are made of the resin; and
an outer peripheral part (4, 204) that is disposed radially outside the hub (2, 202) and is connected to the hub (2, 202) via the connection parts (3, 203), wherein
a resin injection gate mark (5) is provided on one axial end face of the hub (2, 202).

2. The rotor according to claim 1, wherein
the connection parts (3, 203) are each inclined to form an acute angle with respect to an axial direction of the rotor.

3. The rotor according to claim 1 or 2, wherein
the hub (2), the connection parts (3), and the outer peripheral part (4) are each made of a plastic magnet.

4. A production method for a rotor,
the rotor including:
a shaft (1);
a hub (2, 202) that is fixed to one axial end part of the shaft (1), is configured to cover one axial end face of the shaft (1), and is made of a resin;
a plurality of connection parts (3, 203) that radially outward extend from the hub (2, 202) of the rotor and are made of the resin; and
an outer peripheral part (4, 204) that is disposed radially outside the hub (2, 202) and is connected to the hub (2, 202) via the connection parts (3, 203),
the production method comprising:
defining a hub formation space (21) for forming the hub (2, 202), connection part formation spaces (22) for forming the connection parts (3, 203), and an outer peripheral part formation space (23) for forming the outer peripheral part (4, 204), using a plurality of dies (11 to 15) with the hub formation space (21), the connection part formation spaces (22), and the outer peripheral part formation space (23) communicating with each other, and disposing the one axial end face of the shaft (1) in the hub formation space (21); and
injecting a molten resin from a resin injection gate (15a) of one of the dies (15), the resin injection gate (15a) being disposed opposite the one axial end face of the shaft (1), into the hub formation space (21), supplying the molten resin from the hub formation space (21) to the outer peripheral part formation space (23) via the connection part formation spaces (22), and curing the molten resin in each of the hub formation space (21), the connection part formation spaces (22), and the outer peripheral part formation space (23), to form the hub (2, 202), the connection parts (3, 203), and the outer peripheral part (4, 204).
